# EUROPEAN PATENT APPLICATION

(11) **EP 4 480 795 A1**
(43) Date of publication of application: **25.12.2024**
(21) Application number: 24182169.3
(22) Date of filing: 14.06.2024
(51) Int. Cl.: B62H 5/00, B60L 50/64, B62J 43/20, B62M 6/90, E05B 47/00, H01M 50/264

(54) **ELECTRIC LOCK OF BICYCLE BATTERY**

(30) Priority: 20.06.2023 US 202363509092 P
(71) Applicant: Sinox Company Ltd., New Taipei City (TW)
(72) Inventor: WANG, CHIH-LUN, New Taipei City (TW); YU, CHIH-CHAO, New Taipei City (TW); WENG, Chia-Wei, New Taipei City (TW); HUANG, Yueh-Cheng, New Taipei City (TW)
(74) Representative: Cabinet Chaillot

(57) **Abstract**

An electric lock of a bicycle battery has a base (10) and a battery box (20). A first base latch seat (111) of the base (10) has an electronic controller (111) and a latching member (112). The battery box (20) is detachably mounted on the base (10). The latching member (112) is movable or rotatable to engage with a first battery latch seat (21) of the battery box (20). The latching member (112) is moveable or rotatable to disengage from the first battery latch seat (21) under the control of the electronic controller (111). To unlock the battery box (20), it is only necessary to control the electronic controller (111) by signal, and then the latching member (112) on the base (10) may be disengaged from the first battery latch seat (21), so that the battery box (20) can be removed.

## Description

### 1. Field of the Invention

The present invention relates to a lock that electronically controls whether a battery box can be removed or not, especially to a battery box lock for an electric bicycle (E-bike).

### 2. Description of the Prior Arts

Nowadays, many electronic devices use batteries as a power source, and these batteries are often attached to the electronic device only by a clasp without actually locking them. Such a design is fine for electronic devices at home or portable electronic devices, but if the battery is used in an electronic device that will be placed outdoors, the battery may be prone to theft.

If a lock can be installed on the battery to prevent theft, the user will need a key to remove the battery, causing inconvenience.

To overcome the shortcomings, the present invention provides an electronically control battery box lock to mitigate or obviate the aforementioned problems.

The main objective of the present invention is to provide an electronically control battery box lock that can be unlocked by electronic control with no need to use or carry a key, thus facilitating ease in use.

The electronic control battery box lock has a base and a battery box. The base comprises a first base latch seat. The first base latch seat includes an electronic controller and a latching member. The latching member is moveable or rotatable under the control of the electronic controller. The battery box is detachably mounted on the base and comprises a first battery latch seat. The latching member of the first base latch seat is movable or rotatable to engage with the first battery latch seat. When the latching member engages with the first battery latch seat, the battery box is not separated from the base; the latching member is moveable or rotatable to disengage from the first battery latch seat under the control of the electronic controller of the first base latch seat.

The advantage of the present invention is that an electronic controller and a latching member are mounted on a base of the battery box, and the latching member is moveable and rotatable to engage with the first battery latch seat of the battery box. Therefore, normally the battery box cannot be disengaged from the base due to the engagement between the latching member on the base and the first battery latch seat. To unlock the battery box, it is only necessary to control the electronic controller by signal (e.g. through a smartphone application), and then the latching member on the base is disengaged from the first battery latch seat, so that the battery box can be unlocked from the base and removed. The present invention can lock the battery box to avoid theft, and the battery box can be unlocked from the base without using a key, thus facilitating ease in use.

Other objectives, advantages and novel features of the invention will become more apparent from the following detailed description when taken in conjunction with the accompanying drawings.

### IN THE DRAWINGS:

Fig. 1 is a schematic view of an electronic control battery box lock mounted on a bicycle in accordance with the present invention;
Fig. 2 to Fig. 4 are exploded views of the electronic control battery box lock in Fig. 1;
Fig. 5 and Fig. 6 are side cross-sectional views of the electronic control battery box lock in Fig. 1;
Fig. 7 to Fig. 9 are side cross-sectional views of the electronic control battery box lock in Fig. 1;
Fig. 10 to Fig. 11 are exploded views of the electronic control battery box lock in Fig. 1;
Fig. 12 and Fig. 13 are side cross-sectional views of protrusion parts and recessed parts of the electronic control battery box lock in Fig. 1;
Fig. 14 to Fig. 16 are operation schematic views showing separation of a battery box in Fig. 1;
Fig. 17 and Fig. 18 are exploded views of a first base latch seat of the electronic control battery box lock in Fig. 1; and
Fig. 19 and Fig. 20 are sectional operation views of a latching member sensor of the electronic control battery box lock in Fig. 1.

### DETAILED DESCRIPTION OF THE PREFERRED EMBODIMENTS

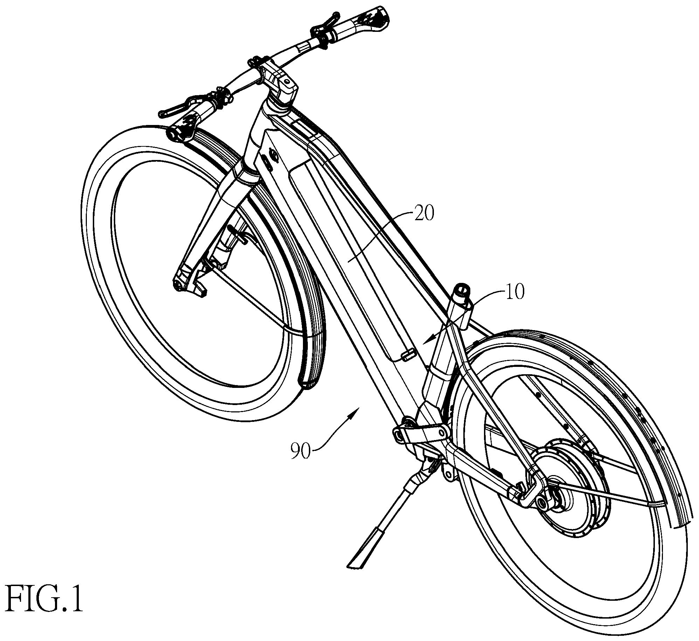

With reference to Fig. 1, Fig. 2 and Fig. 17, an electronically control battery box lock in accordance with the present invention comprises a base 10 and a battery box 20. Preferably, the electronically control battery box lock further includes a manual unlocking member 30, a guidance structure 40 and a latching member sensor 50. The present invention is preferably used on a bicycle and may be used on an electric bicycle. Meanwhile, the base 10 is part of the bicycle frame and is preferably mounted on a down tube 90 of the bicycle frame, but it is not limited thereto, and the base 10 may be mounted in other positions of the bicycle or applied in any other occasion.

The battery box 20 is a compartment for holding a battery, but can also be regarded as a casing for the battery. In addition, the battery box 20 may be a case or a casing for batteries of different sizes and uses.

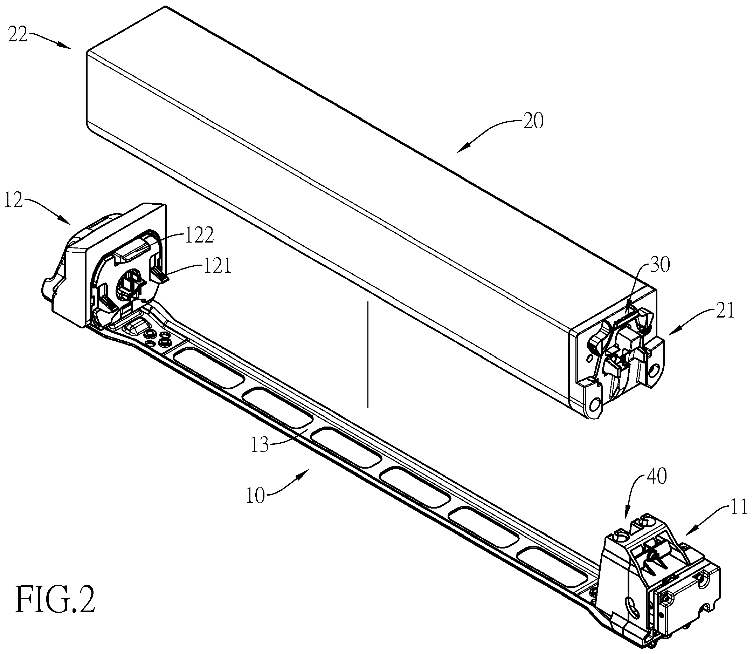

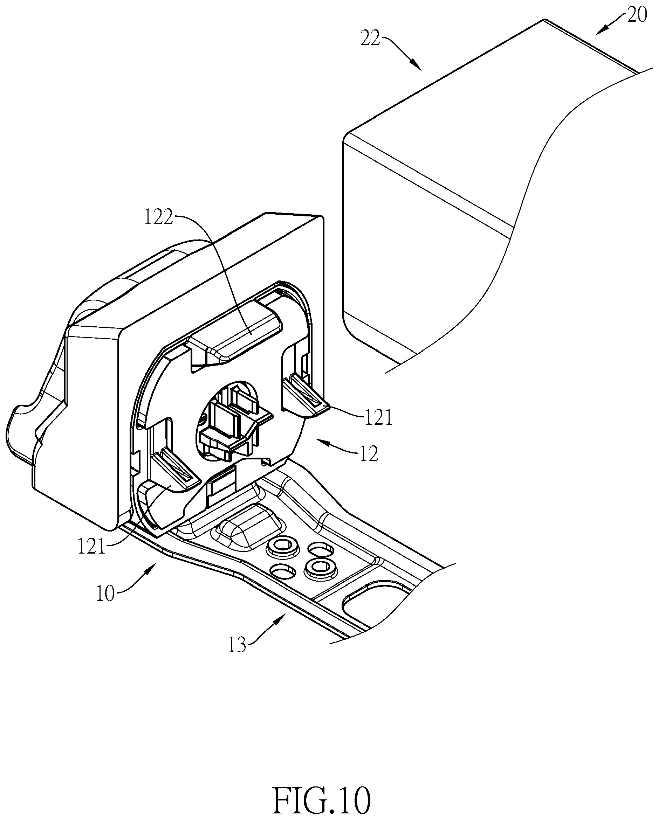

With reference to Fig. 2, Fig. 3 and Fig. 10, the aforementioned base 10 comprises a first base latch seat 11. In this embodiment, the base 10 further includes a connection seat 13 and a second base latch seat 12. The connection seat 13 preferably extends in a straight line. The first base latch seat 11 and the second base latch seat 12 are respectively connected to two ends of the connection seat 13, but it is not limited thereto. The base 10 may be in other shapes, and the first base latch seat 11 and the second base latch seat 12 may not be located on the two ends of the straight line.

The battery box 20 is detachably mounted on the base 10 and comprises a first battery latch seat 21. In this embodiment, the battery box 20 further includes a second battery latch seat 22. The first battery latch seat 21 and the second battery latch seat 22 are respectively located on two ends of the battery box 20. The battery box 20 may be located between the first base latch seat 11 and the second base latch seat 12 of the base 10. Preferably, the distance between the first base latch seat 11 and the second base latch seat 12 corresponds to the length of the battery box 20, so that the two ends of the battery box 20 (the first battery latch seat 21 and the second battery latch seat 22) may respectively abut the first base latch seat 11 and the second base latch seat 12 of the base 10. Preferably, the first base latch seat 11 and the second base latch seat 12 of the base 10 respectively engage with the first battery latch seat 21 and the second battery latch seat 22 of the battery box 20, but it is not limited thereto. The electronic control battery box lock may not comprise the second base latch seat 12 and the second battery latch seat 22, and the battery box 20 can be engaged with the first battery latch seat 21 only through the first base latch seat 11. For example, a groove is formed on the base 10, and the battery box 20 is accommodated in the groove. The first battery latch seat 21 faces the groove bottom, the first base latch seat 11 is also located on the groove bottom, so that the battery box 20 can be engaged only through the first base latch seat 11 and the first battery latch seat 21.

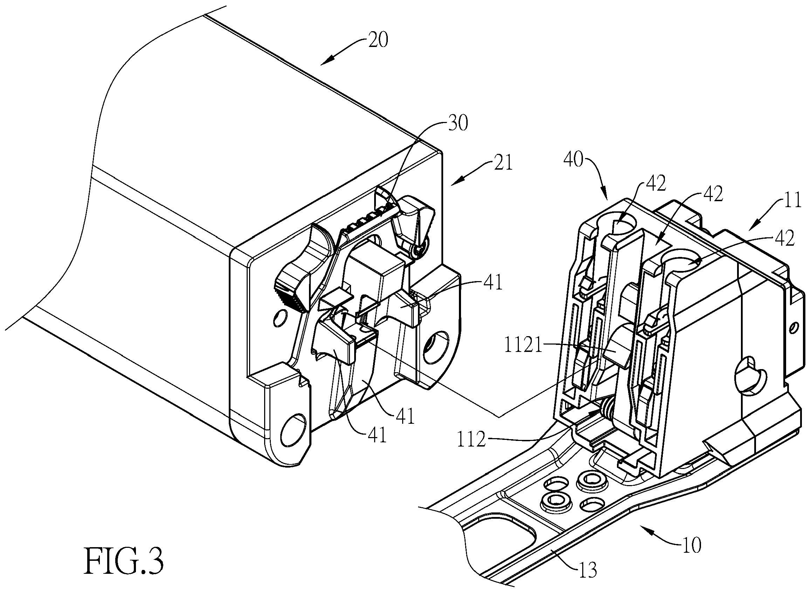

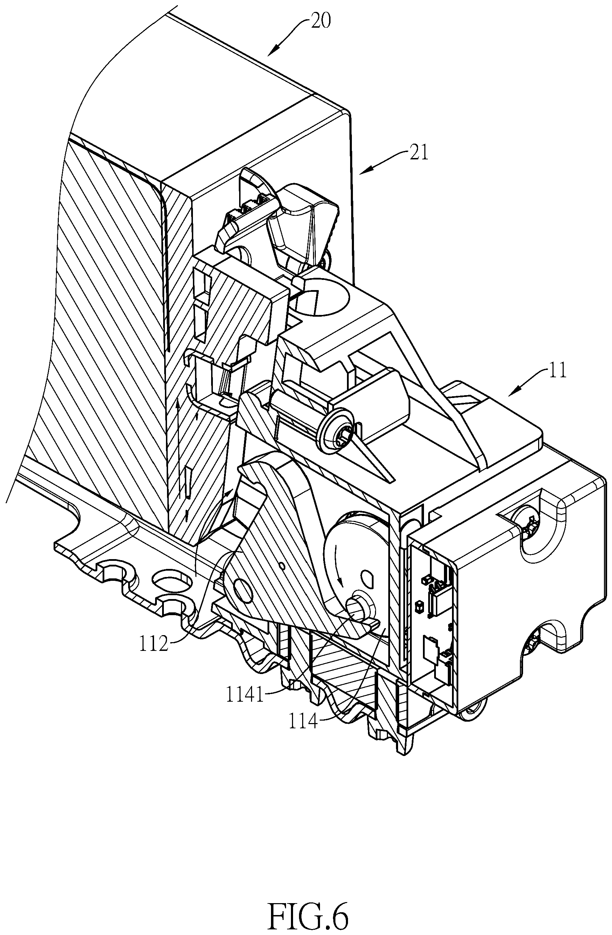

With reference to Fig. 3 to Fig. 6 and Fig. 17, the aforementioned first base latch seat 11 includes an electronic controller 111 and a latching member 112. The latching member 112 is movable or rotatable to engage with the first battery latch seat 21 under the control of the electronic controller 111. When the latching member 112 engages with the first battery latch seat 21, the battery box 20 cannot be separated from the base 10, and the latching member 112 is movable or rotatable to disengage from the first battery latch seat 21 under the control of the electronic controller 111.

In this embodiment, the electronic controller 111 drives the latching member 112 to rotate to disengage the first battery latch seat 21. The electronic controller 111 comprises a controller area network bus (CAN bus) and a Bluetooth low energy (BLE) system, and also can comprise a Global Positioning System (GPS). Therefore, the electronic controller 111 may be controlled via wired or wireless methods preferably via a mobile application.

In this embodiment, the latching member 112 regularly moves or rotates toward a direction of engaging the first battery latch seat 21. In other words, the electronic controller 111 is only used to disengage the latching member 112 from the first battery latch seat 21. During the installation of the battery box 20, when the first battery latch seat 21 engages with the first base latch seat 11, the first battery latch seat 21 can push the latching member 112 away without reversing the movement or rotation of the latching member 112, so that the battery box 20 is convenient to install. In addition, the latching member 112 comprises a retreat part 1121 being preferably curved and abutted by the first battery latch seat 21, so as to better facilitate the first battery latch seat 21 to push the latching member 112 away.

Preferably, the first base latch seat 11 comprises at least one latching flexible member 113. Precisely, the latching flexible member 113 is a torsion spring and is configured to regularly rotate the latching member 112 in the direction of engaging the first battery latch seat 21, but it is not limited thereto, as other methods can be used, such as changing to two opposite magnetic magnets. In addition, the latching member 112 may not regularly be moved or rotated in the direction of engaging the first battery latch seat 21, but the electronic controller 111 directly moves the latching member 112 in the direction of engaging the first battery latch seat 21.

In this embodiment, the electronic controller 111 is a motor (preferably a servomotor or a stepper motor) and moves or rotates the latching member 112 through a rotating member 114. An eccentric part 1141 protrudes from the rotating member 114. The electronic controller 111 moves or rotates the latching member 112 in a direction away from the first battery latch seat 21 by rotating the rotating member 114, and the latching member 112 is disengaged from the first battery latch seat 21. Preferably, the eccentric part 1141 protrudes from the rotating member 114 along an axial direction of the rotating member 114 but deviates from the center of the rotating member 114. Therefore, after the rotating member 114 rotates, the eccentric part 1141 can abut against and drive the latching member 112 to rotate, but it is not limited thereto. The eccentric part 1141 may also protrude radially from the periphery of the rotating member 114, so that the rotating member 114 can be regarded as a cam, and can also abut against and drive the latching member 112 to rotate. In addition, the electronic controller 111 may also rotate the latching member 112 by pushing one end of the latching member 112, in which case the electronic controller 111 may be a pressure cylinder or a linear motor. The latching member 112 may not rotate but move; when engaging the first battery latch seat 21, the latching member 112 is simply moved to extend into the first battery latch seat 21, which also prevents the first battery latch seat 21 from separating.

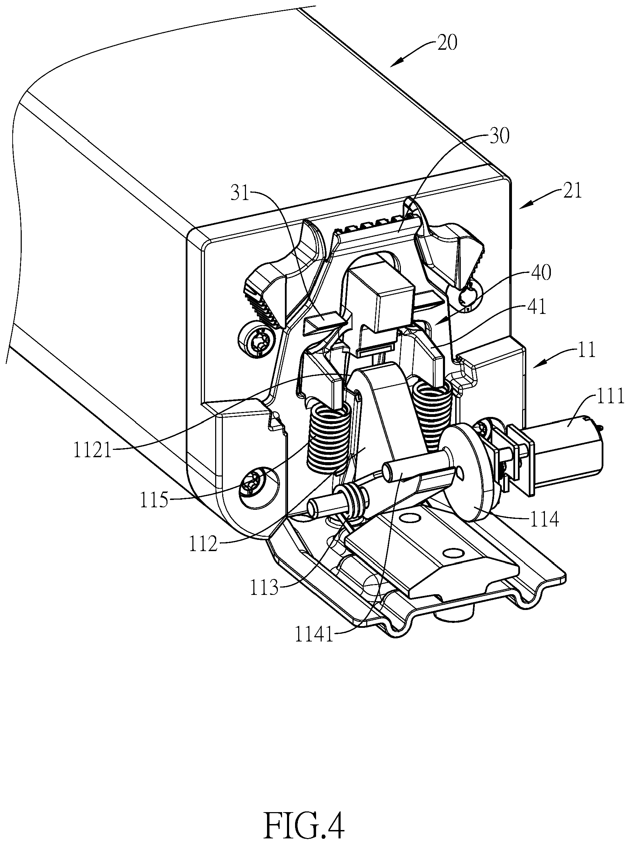

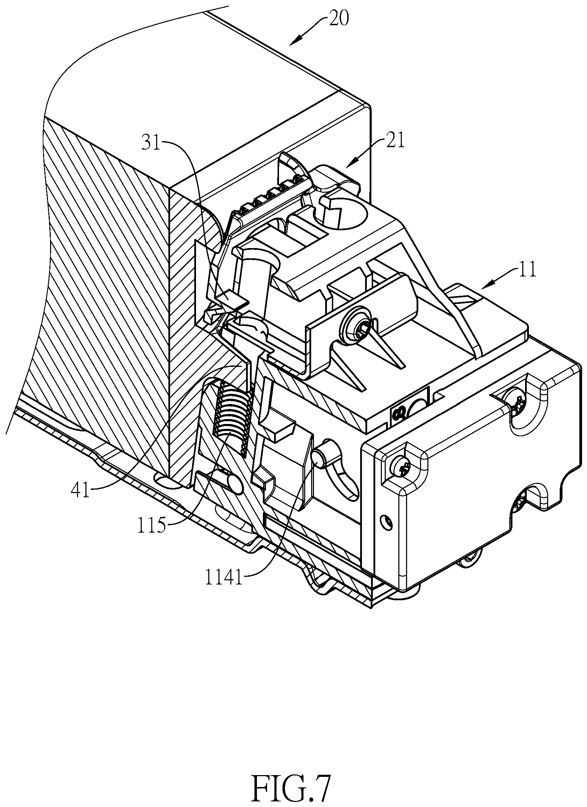

With reference to Fig. 4, Fig. 5 and Fig. 7, the manual unlocking member 30 is mounted on the first base latch seat 11 or the first battery latch seat 21, and selectively engages the other of the first base latch seat 11 and the first battery latch seat 21. When the latching member 112 disengages the first battery latch seat 21 and the manual unlocking member 30 disengages the other of the first base latch seat 11 and the first battery latch seat 21, the battery box 20 is capable of disengaging the base 10.

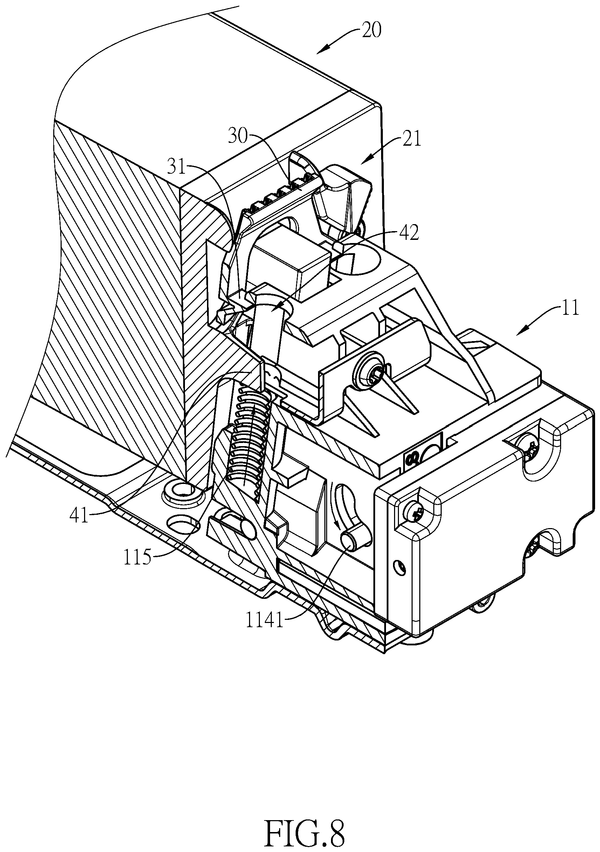

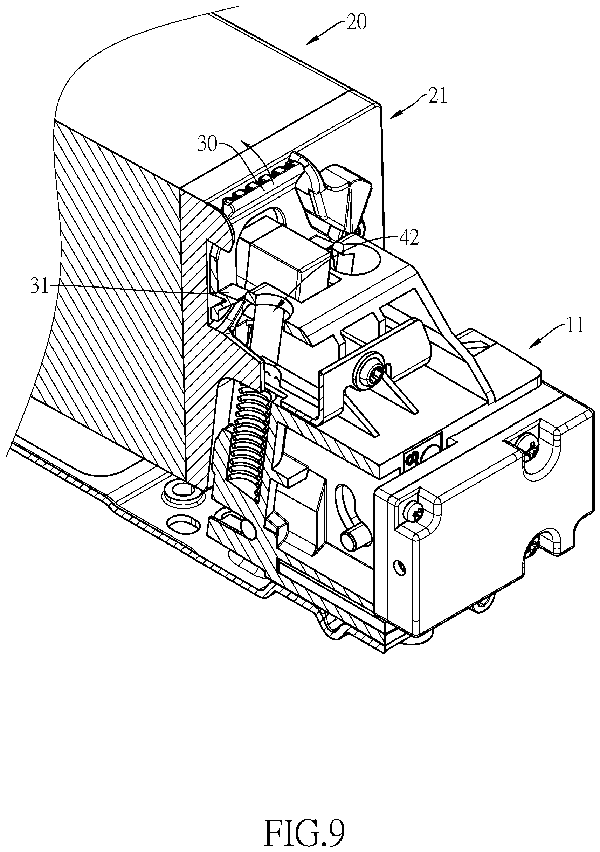

With reference to Fig. 4, Fig. 8 and Fig. 9, in this embodiment, the manual unlocking member 30 is mounted on the first battery latch seat 21 and selectively engages with the first base latch seat 11. Preferably, the manual unlocking member 30 is flexible and can be triggered. Normally, at least one support part 31 of the manual unlocking member 30 abuts the first base latch seat 11 and prevents the battery box 20 from moving (upwardly) away from the base 10 (as shown in Fig. 8). After triggering the manual unlocking member 30, the support part 31 of the manual unlocking member 30 is detachable from the first base latch seat 11 (as shown in Fig. 9), and no longer prevents the battery box 20 from disengaging from the base 10.

With reference to Fig. 4, Fig. 7 and Fig. 17, in this embodiment, the first base latch seat 11 comprises at least one separation member 115 tending to push (upwardly) the first battery latch seat 21 away from the base 10. When the latching member 112 is disengaged from the first battery latch seat 21, the separation member 115 pushes (upwardly) the first battery latch seat 21 away from the base 10. Meanwhile, the manual unlocking member 30 preferably engages with the other of the first base latch seat 11 and the first battery latch seat 21. In this embodiment, the support part 31 of the manual unlocking member 30 (upwardly) abuts the first base latch seat 11, and then the manual unlocking member 30 can be operated so that the battery box 20 can be disengaged from the base 10, but it is not limited thereto. The latching member 112 and the manual unlocking member 30 also can be clamped at the same time, in which case the manual unlocking member 30 can be unlocked first, and then the latching member 112 can be disengaged from the first battery latch seat 21, but it is not limited thereto. The separation member 115 can also be used without the manual unlocking member 30, after the latching member 112 is disengaged from the first battery latch seat 21, the first battery latch seat 21 of the battery box 20 will be pushed away from the base 10, and the first battery latch seat 21 can then be separated from the first base latch seat 11. In addition, in this embodiment, the separation member 115 is a flexible element and preferably is a compression spring, but it is not limited thereto.

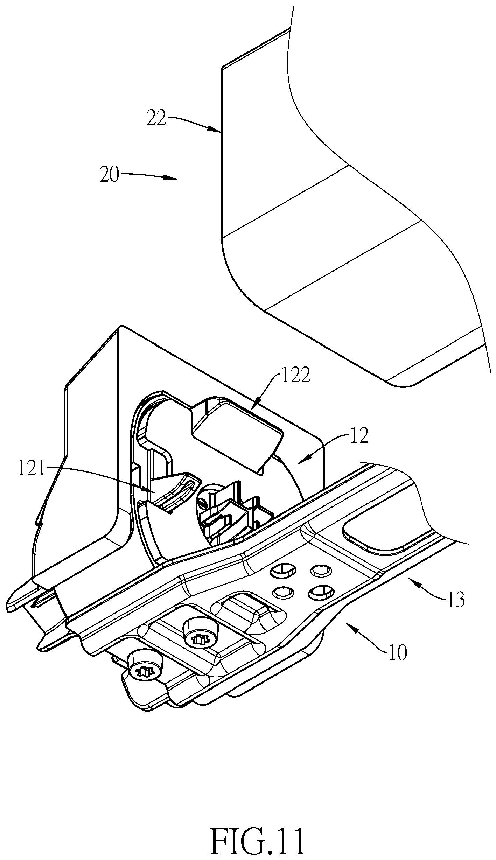

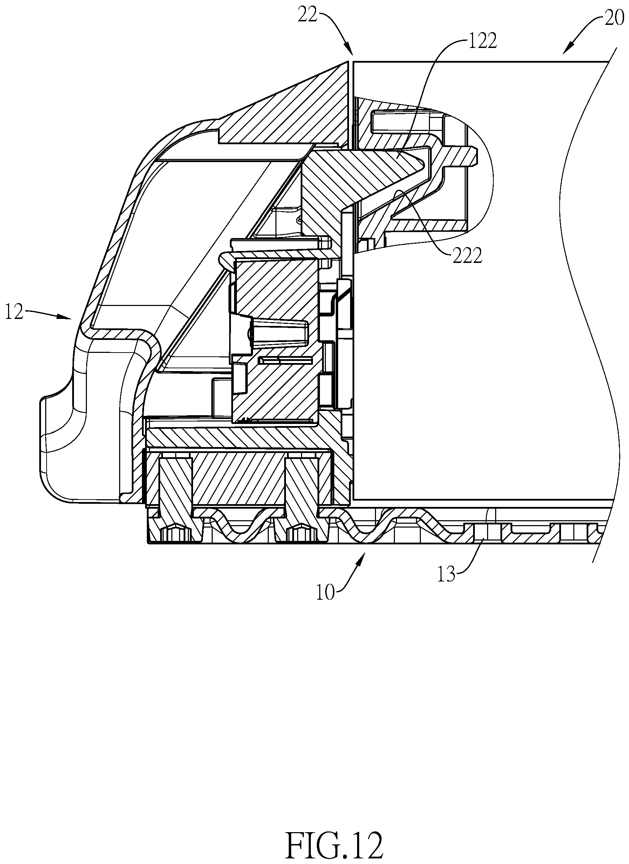

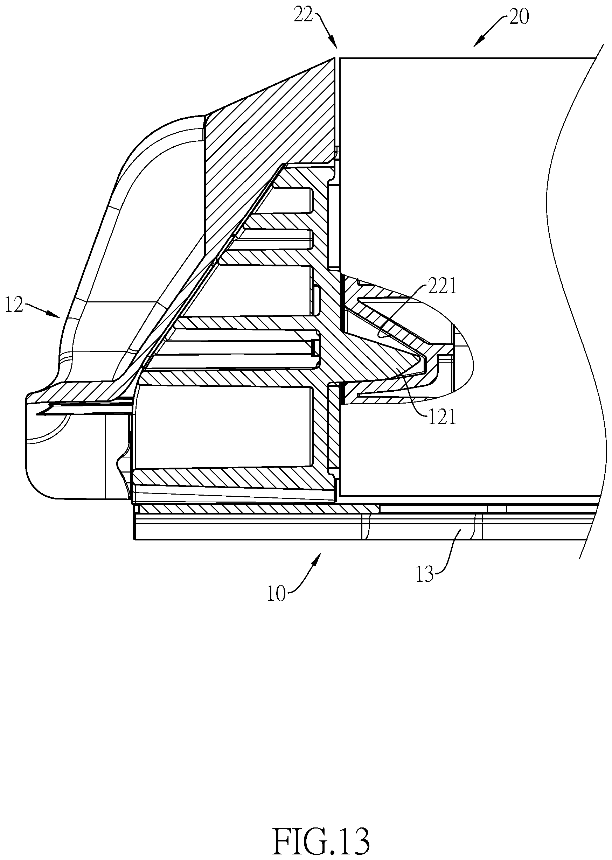

With reference to Fig. 2 and Fig. 10 to Fig. 13, in this embodiment, when the battery box 20 is located between the first base latch seat 11 and the second base latch seat 12 of the base 10, the second battery latch seat 22 and the second base latch seat 12 engage with each other. When the latching member 112 of the first base latch seat 11 disengages the first battery latch seat 21, the second battery latch seat 22 may be tilted (upwardly) away from the base 10 to disengage from the second base latch seat 12.

In this embodiment, at least one side protrusion part 121 and a top protrusion part 122 protrude from the second base latch seat 12; preferably, there are two side protrusion parts 121. The second battery latch seat 22 is recessed with at least one side recessed part 221 and a top recessed part 222; preferably, there are two side recessed parts 221. The side recessed part 221 and the top recessed part 222 are configured to respectively accommodate the side protrusion part 121 and the top protrusion part 122, but it is not limited thereto. The quantities and positions of the protrusion parts and the recessed parts can be adjusted according to need, the recessed parts may also be modified to be located on the second base latch seat 12, and the protrusion parts are modified to be located on the second battery latch seat 22.

Preferably, the top and bottom surfaces of the side protrusion part 121 and the top protrusion part 122 may be inclined, and the top side inner surfaces and the bottom side inner surfaces of the side recessed part 221 and the top recessed part 222 may be inclined, thereby facilitating the second battery latch seat 22 to be tilted (upwardly) away from the base 10 to disengage from the second base latch seat 12.

With reference to Fig. 3, Fig. 5 and Fig. 7, the aforementioned guidance structure 40 is mounted on the first base latch seat 11 and the first battery latch seat 21. When the second battery latch seat 22 and the second base latch seat 12 are tilted in engagement with each other, the first battery latch seat 21 may be inserted into the first base latch seat 11 along the guidance structure 40 and toward the base 10 (downwardly), so as to prevent the first battery latch seat 21 from swinging (left or right) relative to the first base latch seat 11. Preferably, the guidance structure 40 includes at least one guidance block 41 and at least one guidance slot 42, and preferably there are three guidance blocks 41 and three guidance slots 42. The guidance blocks 41 are formed on the first battery latch seat 21, and the guidance slots 42 are formed on the first base latch seat 11, but it is not limited thereto. The guidance blocks 41 may also be formed on the first base latch seat 11, and the guidance slots 42 may be formed on the first battery latch seat 21.

With reference to Fig. 8, in this embodiment, the place where the support part 31 of the manual unlocking member 30 abuts (upwardly) the first base latch seat 11 is the periphery of the guidance slot 42, and the place where the separation member 115 pushes against the first battery latch seat 21 is the guidance block 41, but it is not limited thereto.

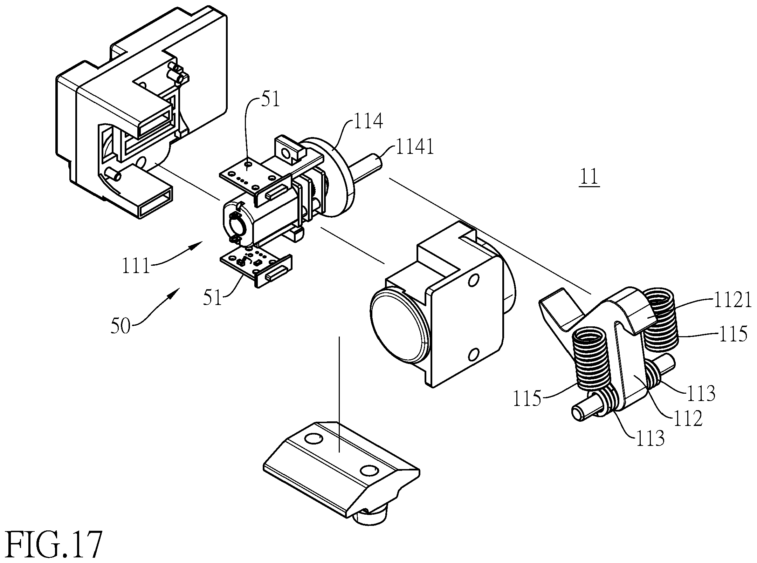

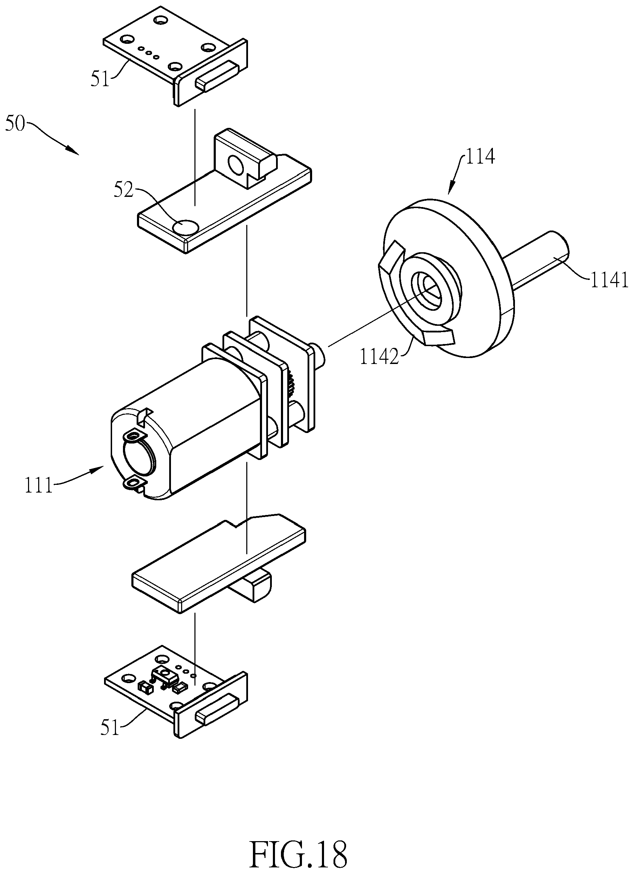

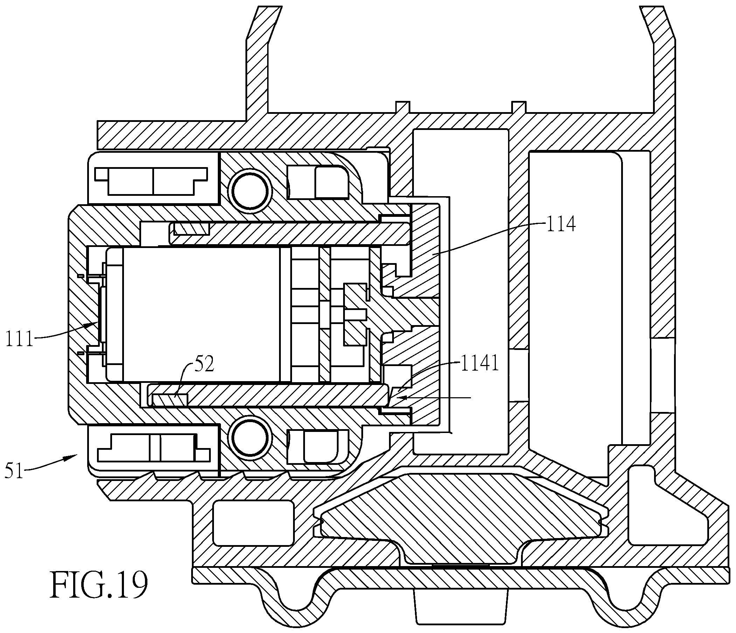

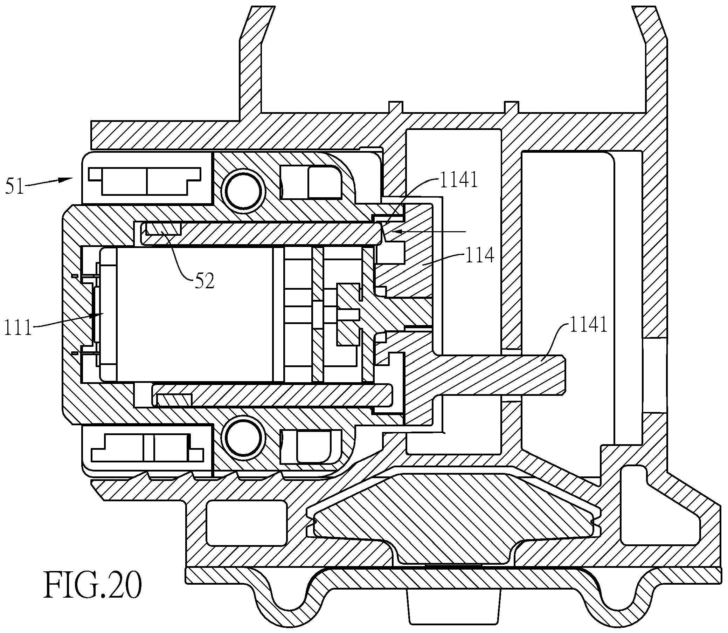

With reference to Fig. 17 to Fig. 20, the aforementioned latching member sensor 50 is electrically connected to the electronic controller 111, and is configured to sense whether the latching member 112 moves or rotates to engage with the first battery latch seat 21. Preferably, the latching member sensor 50 includes two sensor units 51 and two sensory units 52, and the two sensor units 51 are electrically connected to the electronic controller 111. The electronic controller 111 is capable of rotating the rotating member 114 in two opposite directions, the rotation of the rotating member 114 in two opposite directions will push the two sensory units 52 towards the two sensor units 51, and each of the sensory units 52 is sensed by the corresponding sensor unit 51 after being pushed. The two sensor units 51 are configured to determine whether the latching member 112 is unlocked or locked (engaged).

In this embodiment, a rotating guide member 1142 protrudes from one side of the rotating member 114, and the rotating guide member 1142 extends in an arc centered on the axis of the rotating member 114. The two ends of the rotating guide member 1142 respectively comprise an incline, each of the sensory units 52 is mounted on a mobile seat, and the mobile seat comprises an incline. When the rotating member 114 rotates in two opposite directions, the two inclines of the rotating member 114 will respectively abut the incline of the mobile seat of the sensory unit 52, thus pushing the mobile seat and the sensory unit 52. The sensory unit 52 is preferably a magnet, and the sensor unit 51 is preferably a Hall sensor. It is not limited thereto, as the sensory unit 52 and the sensor unit 51 can also be reversed.

With reference to Fig. 2, Fig. 3, Fig. 12 and Fig. 13, to install the battery box 20 in the base 10, firstly, the second battery latch seat 22 at one end of the battery box 20 is obliquely inserted into the second base latch seat 12 of the base 10, so that the side recessed part 221 and the top recessed part 222 accommodate the side protrusion part 121 and the top protrusion part 122 respectively. Then, the guidance block 41 of the first battery latch seat 21 at the other end of the battery box 20 is downwardly inserted into the first base latch seat 11 along the guidance slot 42 of the first base latch seat 11.

During the insertion process, the guidance block 41 in the middle of the first battery latch seat 21 is pushed against the retreat part 1121 of the latching member 112 so that the latching member 112 compresses the latching flexible member 113 and rotates. Until the first battery latch seat 21 has moved into position, the latching flexible member 113 again pushes the latching member 112 back to the original position and engages with the first battery latch seat 21. At this time, each of the recessed parts 221, 222 of the second battery latch seat 22 also completely accommodates each of the protrusion parts 121, 122 of the second base latch seat 12. Thereby, the second base latch seat 12 and the first base latch seat 11 clamp and engage the battery box 20 in two opposing directions, so that the battery box 20 cannot be separated from the base 10.

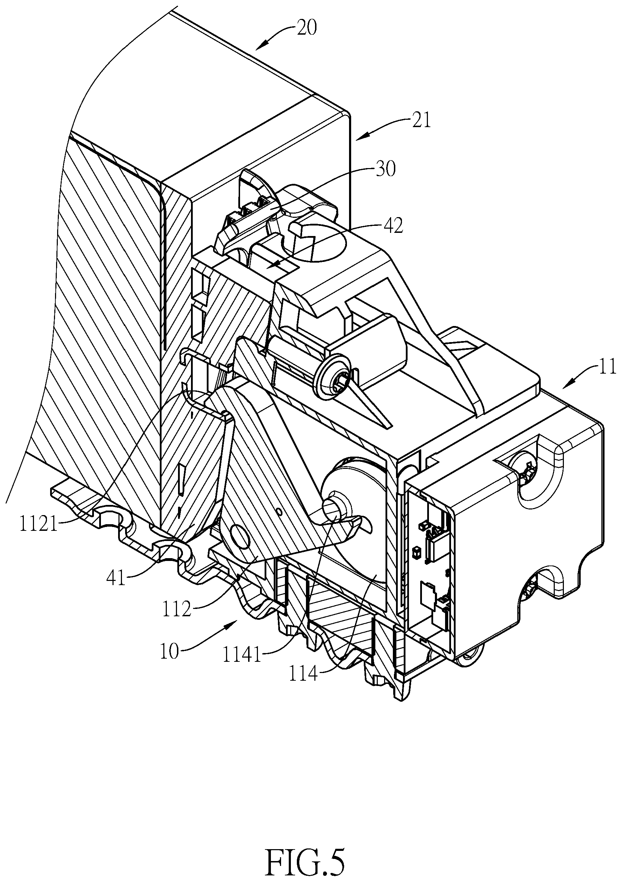

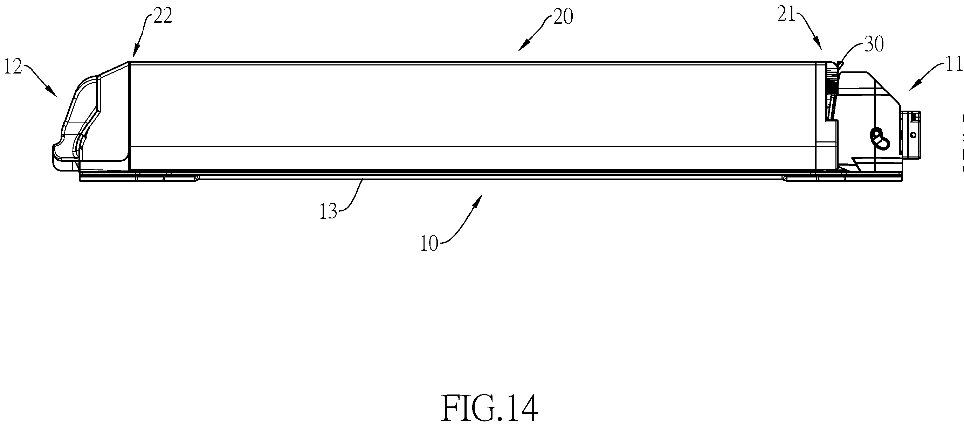

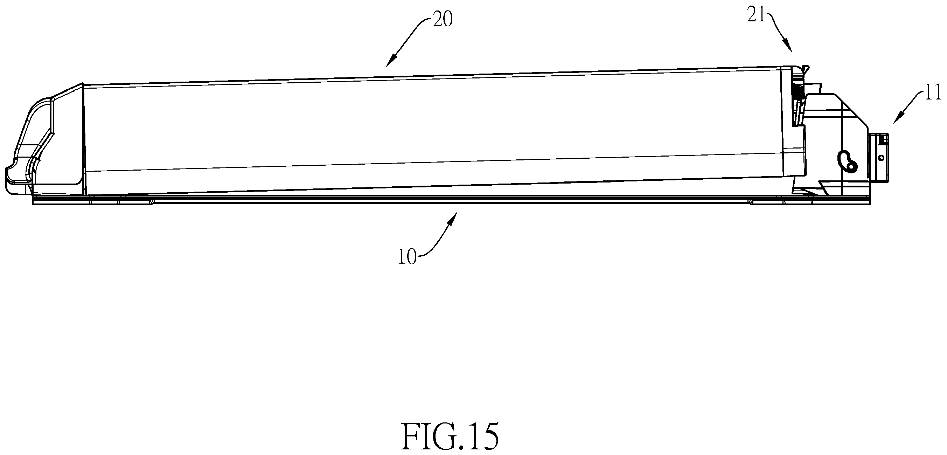

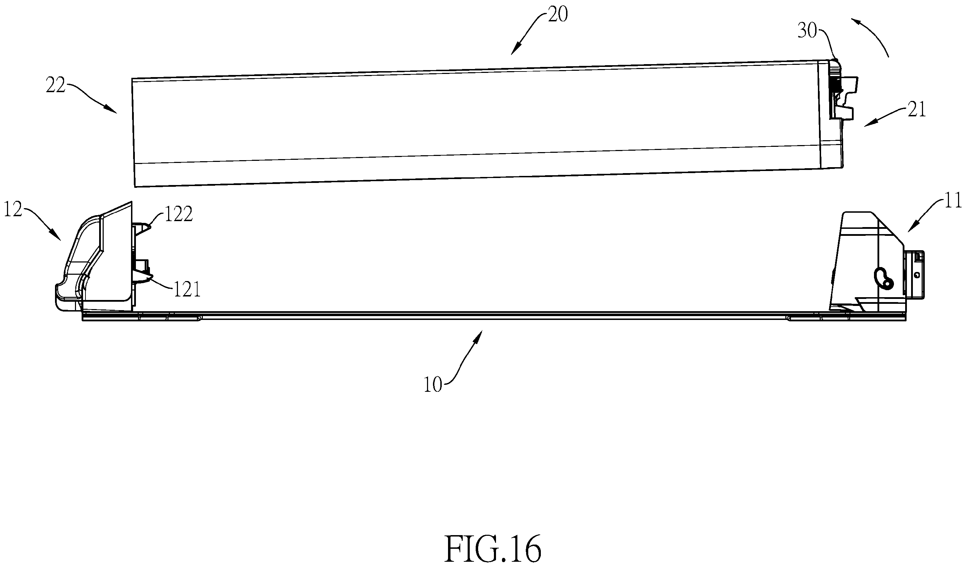

With reference to Fig. 5 to Fig. 10 and Fig. 14 to Fig. 16, to remove the battery box 20, firstly, the electronic controller 111 rotates the rotating member 114 to rotate the latching member 112 away from the first battery latch seat 21. Then, the separation member 115 will rapidly push (upwardly) the first battery latch seat 21 away from the base 10, until the manual unlocking member 30 (upwardly) abuts the first base latch seat 11. Then the manual unlocking member 30 is triggered so that the first battery latch seat 21 is disengaged (upwardly) from the first base latch seat 11, and then the second battery latch seat 22 is disengaged obliquely from the second base latch seat 12.

Preferably, in the aforementioned unlocking process, when the electronic controller 111 begins to rotate the rotating member 114, if the sensor unit 51 that determines whether or not to unlock senses the sensory unit 52, the sensing unit 51 will determine that the rotating member 114 has reached the unlocked position, and the electronic controller 111 will stop rotating. After a specific time (e.g., one second), the electronic controller 111 will start to rotate the rotating member 114 in the reverse direction, and if the sensor unit 51 that determines whether or not to lock senses the sensory unit 52, the sensor unit 51 will determine that the rotating member 114 has reached the locked position, and the electronic controller 111 will stop rotating. In the aforementioned process, when the electronic controller 111 starts to rotate (or reverse rotation) after a specific time (e.g., two seconds), if the sensor unit 51 that determines whether or not to unlock (or the sensor unit 51 that determines whether or not to lock) has not sensed the sensory unit 52, then the electronic controller 111 will stop rotating. The use of the sensor unit 51 and the sensory unit 52 is not limited to the above.

The present invention can lock the battery box 20 to avoid theft, there is no need to use or carry a key, the battery box 20 can be unlocked from the base 10 through an electronic controller (e.g., through a mobile application), so that the battery box 20 can be removed, thus facilitating ease in use.

## Claims

1. An electronically control battery box lock, and **characterized in that** the electronically control battery box lock comprises:
a base (10) comprising
a first base latch seat (11) comprising
an electronic controller (111); and
a latching member (112) being moveable or rotatable under the control of the electronic controller (111);
a battery box (20) detachably mounted on the base (10), and comprising
a first battery latch seat (21); the latching member (112) of the first base latch seat (11) being movable or rotatable to engage with the first battery latch seat (21); when the latching member (112) engages with the first battery latch seat (21), the battery box (20) being inseparable from the base (10); the latching member (112) being moveable or rotatable to disengage the first battery latch seat (21) under the control of the electronic controller (111) of the first base latch seat (11).

2. The electronically control battery box lock as claimed in claim 1, wherein
the base (10) further comprises
a second base latch seat (12), the first base latch seat (11) and the second base latch seat (12) respectively located on two ends of the base (10);
the battery box (20) further comprises
a second battery latch seat (22); the first battery latch seat (21) and the second battery latch seat (22) respectively located on two ends of the battery box (20); the battery box (20) detachably located between the first base latch seat (11) and the second base latch seat (12) of the base (10);
when the battery box (20) is located between the first base latch seat (11) and the second base latch seat (12) of the base (10), the second battery latch seat (22) and the second base latch seat (12) engage with each other;
when the latching member (112) of the first base latch seat (11) is disengaged from the first battery latch seat (21), the second battery latch seat (22) is capable of being tilted away from the base (10) to disengage from the second base latch seat (12).

3. The electronically control battery box lock as claimed in claim 2 further comprising:
a guidance structure (40) mounted on the first base latch seat (11) and the first battery latch seat (21); when the second battery latch seat (22) and the second base latch seat (12) are tilted and coupled to each other, the first battery latch seat (21) inserted into the first base latch seat (11) along the guidance structure (40) toward the base (10).

4. The electronically control battery box lock as claimed in any one of claims 1 to 3, wherein the latching member (112) tends to be moved or rotated to engage the first battery latch seat (21).

5. The electronically control battery box (20) lock as claimed in any one of claims 1 to 3, wherein the electronic controller (111) comprises
a rotating member (114) comprising
an eccentric part (1141) protruding from the rotating member (114), the electronic controller (111) moving or rotating the latching member (112) in a direction away from the first battery latch seat (21) to disengage the latching member (112) from the first battery latch seat (21) by rotating the rotating member (114).

6. The electronically control battery box lock as claimed in any one of claims 1 to 3 further comprising:
a manual unlocking member (30) mounted on one of the first base latch seat (11) and the first battery latch seat (21), and selectively engaging the other of the first base latch seat (11) and the first battery latch seat (21); when the latching member (112) is disengaged from the first battery latch seat (21) and the manual unlocking member (30) is disengaged from said the other of the first base latch seat (11) and the first battery latch seat (21), the battery box (20) being capable of disengaging the base (10).

7. The electronically control battery box lock as claimed in claim 6, wherein the first base latch seat (11) comprises
at least one separation member (115) tending to push the first battery latch seat (21) away from the base (10); when the latching member (112) is disengaged from the first battery latch seat (21), the separation member (115) pushing the first battery latch seat (21) away from the base (10), thereby engaging the manual unlocking member (30) with said the other of the first base latch seat (11) and the first battery latch seat (21).

8. The electronically control battery box lock as claimed in any one of claims 1 to 3, wherein the first base latch seat (11) comprises
at least one separation member (115) tending to push the first battery latch seat (21) away from the base (10); when the latching member (112) is disengaged from the first battery latch seat (21), the separation member (115) pushing the first battery latch seat (21) away from the base (10).

9. The electronically control battery box lock as claimed in any one of claims 1 to 3 further comprising:
a latching member (112) sensor electrically connected to the electronic controller (111), and configured to sense whether the latching member (112) moves or rotates to engage the first battery latch seat (21).

10. The electronically control battery box (20) lock as claimed in claim 9, wherein
the latching member (112) sensor comprises
two sensor units (51) electrically connected to the electronic controller (111); and
two sensory units (52) respectively corresponding to the two sensor units (51);
the electronic controller (111) comprises
a rotating member (114); the electronic controller (111) moving or rotating the latching member (112) by rotating the rotating member (114); the electronic controller (111) being capable of rotating the rotating member (114) in two opposite directions, the rotation of the rotating member (114) in two opposite directions respectively pushing the two sensory units (52) towards the two sensor units (51); each of the sensory units (52) sensed by the corresponding sensor unit (51) after being pushed.
